# EUROPEAN PATENT APPLICATION

(11) **EP 1 526 344 A1**
(43) Date of publication of application: **27.04.2005**
(21) Application number: 03023843.0
(22) Date of filing: 20.10.2003
(51) Int. Cl.: F24J 2/04, F24J 2/42, F24J 2/46

(54) **Thermal water heating module with enlarged energy absorbing surface and insulation against heat loss**

(71) Applicant: Eckart, Erich G. Dr., 80538 München (DE)
(72) Inventor: Eckart, Erich G. Dr., 80538 München (DE)

(57) **Abstract**

The invention relates to a thermal water heating system for swimming pools and houses, consisting of a plurality of connectable thermal water heating modules with enlarged energy absorbing surface area and insulation against heat loss.

## Description

### BACKGROUND OF THE INVENTION

### 1.Field of the Invention

The present invention relates to an improved solar/thermal energy absorbing module, for maximum performance, solving the problem in a different way, avoiding ugliness, combining function and design, enlarged heat absorbing surface area, adding insulation and blend it in as a basic element of a pool: a plurality of tile shaped, connectable, surface enlarged, insulated modules.

### 2. Description of the Prior Art

The utilization of solar energy to heat water for swimming pools, but not limited to. is well known and almost state of the art today.
The system to heat water, using solar collectors/absorbers has not changed in years. All known system are based on the same principle: " water hose in the sun" These systems use circular tubes pressed in mats or aligned parallel or webbed together, generally mounted on the roof or in frames. Their coefficient of performance is substantially identical.

They also share the major disadvantages of the principle itself:
a) system immanent
b) extern
The circular shape of the tubes exposes less heat absorbing surface to the sun, than a "flattened" oval shape, as described in Rich, United States Patent No. 6,024,086, or Ranyak, U.S. Pat. No. 5,275,148, using tubular elements with octagonal cross sections to enlarge the surface area.

Both systems improve the performance by increasing the radiation exposed surface area. However, to optimize performance it is necessary to expose a permanent and constant 90 degree angle to the sun's radiation, to avoid deflection and reflection. As these systems do not follow the sun or its inclination in different seasons, their efficiency is decreased.

Most of these systems are mounted on roofs, preferably in south/west direction, compromising the position of the roof, size, inclination, with reduced exposure to the sun.

Because of their inclined position on the roof, these systems are affected by wind and cool air, resulting in reduced efficiency.

The energy of the sun's radiation decreases with the depth of penetration. In a circular tube system, the sun exposed water layer is warmer than the bottom layer. Some manufacturers try to overcome that, by spiralling the water through the tubes. That does not solve the problem, it cures the symptoms: they just mix colder water with warmer water, resulting in an averaged temperature.

None of the tubular systems has bottom insulation against heat loss.

In a 1999 published study of the Department Of Energy, 19 % would not buy roof mounted systems because of their unattractiveness.

The aforementioned system-immanent and extern disadvantages of tubular systems result in a fragmented coefficient of performance.

It should therefore be apparent, that a need exists for an improved system without those disadvantages, also in respect to environmental concerns.

### SUMMARY OF THE INVENTION

It is one object of the present invention to provide a thermal water heating module without aforementioned disadvantages.

It is object of the present invention to enlarge the energy absorbing surface by adding geometrical shapes like hemispheres (bubbles), but not limited to, resulting in more energy absorption per sq/inch.

It is another object of the present invention to provide the thermal water heating module with a flat water section (flatbed system), to evenly collect and distribute the energy within the module.

Another object of the present invention is to insulate the thermal water heating module's bottom part, which is not exposed to the sun, to prevent heat loss.

It is also object of the invention to integrate it as a natural design element of the "pool- area", as tiles on the pool deck, terrace...laid out horizontally, hereby minimizing wind affects.

It is object of the present invention to solve the problems of tubular systems by a complete different technical approach.

These objects are achieved as now described: the thermal water heating module is not tubular, but plate shaped, like tiles, to walk on. A plurality of these modules (tiles), connected to each other, and laid out as tiles, go around the pool. They are element - like tiles- of the pool-deck, terrace, but not limited to. Pool water is pumped through the modules, using the filter- or an extra pump. It is a known fact, that the best position of a pool is, where it is exposed to bright sunlight for most of the day, year. Therefore tiles around the pool absorb the most sun energy. Tiling the pool -deck with the present invention, lets the pool-deck heat the pool.
The upper surface area of the module (tile), which is exposed to the solar radiation, is constructed and arranged so, that the upper surface area is greater than a surface area of a corresponding planar surface within the same perimeter.

It has proved to be advantageous to enlarge the surface by using a plurality of tiny hemispherical shaped bubbles .The geometrical shape of each of these hemispheres ensures the perfect 90 Degree angle of incidence for the sun's radiation, all day long, and in all seasons.

As the circumference, volume of a hemisphere exceeds the same diameter circular surface by ca. 57%, geometrically, it adds additional energy absorbing surface to the module (tile) within the same perimeter, for optimizing energy transfer.

And it forms a non-skid surface, preventing accidents, especially in wet areas, like around pools.

Pool water circulates through the modules. The water leading section is plate shaped, so forming a flat bed for even distribution and absorption of the solar, thermal energy,
As an alternative, inside the module a plurality of tubes form the water leading duct.

Horizontally laid tiles are less wind and air affected than inclined systems on the roof.

The water leading part of the module is constructed and arranged in a depth that allows a metered flow as required by volume, but thin enough to eliminate cold/warm layers. The thickness of the water layer is less than that of the module, hereby creating space underneath- between pool deck and water layer- for insulation purposes.

It is advantageous, to whirl the water, to evenly distribute it inside the module. Therefore circular and /or cross/line shaped, but not limited to, spacers are built in.

These spacers also serve as support between the top and bottom of the water leading section.

The insulation part of the module is constructed and arranged, that it is divided in a plurality of segments that form chambers, using air as a natural insulation mean, "air-pockets" and also serve as support to evenly distribute the weight on the module.

The connection between the modules is a male /female adapter coupling system and consists of one or more adapter/connectors per tile. The male adapters have notches for rubber O- rings, for a leak proof connection.

The male adapter has a snap-joint coupling, to connect and lock into the female adapter, for easy snap- in installation.

The module consists of a plastic-polymer like ABS, PP, HDPE Centrex, UV stabilized, manufactured by injection-moulding or blow-moulding.

### BRIEF DESCRIPTION OF THE DRAWINGS

An embodiment of the invention is described in the following by way of further details and advantageous further embodiments, in which
FIG. 1 is an isometric perspective view of the Thermal heating module with enlarged energy absorbing surface and insulation against heat loss in a see-through depiction.
FIG. 2 is a top view of the module, illustrating the hemispheres on top of the module
FIG. 3 is a top view of the module's water leading section, illustrating circular and cross- shaped support spacers, also causing the water to whirl inside the module.
FIG. 4 is a bottom view of the module, illustrating the support beams, which form the air-chambers for insulation.
FIG. 5 is an alternative bottom view of the upper heat absorbing plate with moulded-in support bosses and open edged rhombuses.
FIG. 6 is a sectional view, of the module, illustrating water layer and insulation air chambers.
FIG. 7 is a detailed sectional view of the male adapter with groves and snap-joint pins.

### DETAILED DESCRIPTION OF THE INVENTION

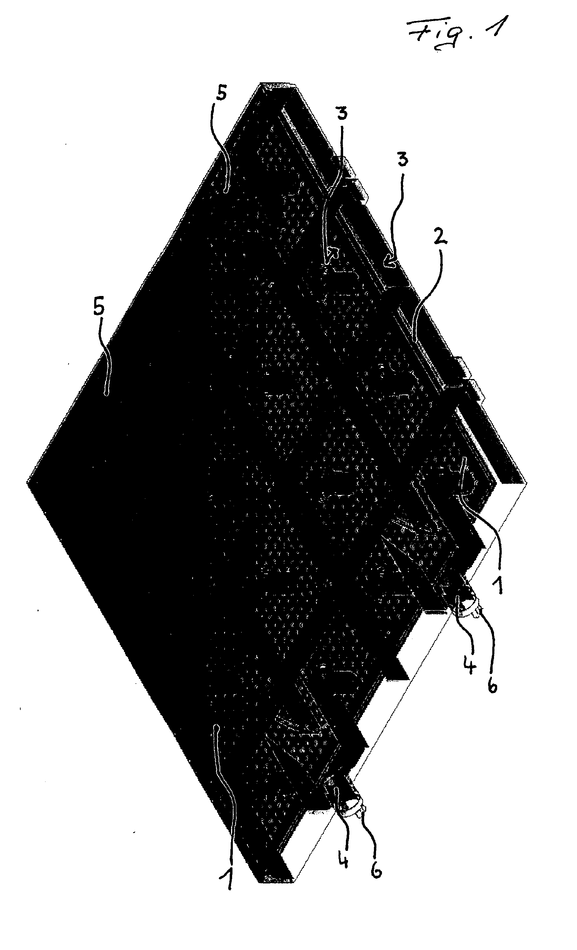

Fig. 1 shows the module as a tile, made of UV stabilized plastic polymers by an injection moulding process, consisting of 2 separate pieces, upper and lower and welded together by chemical or ultrasonic means. Its walk-on surface is enlarged by a plurality of small hemispheres **1,** hereby exposing more surface to the sun, compared to a planar surface with the same perimeter and also offering a permanent, perfect 90 degree angle of incidence for the sun's radiation at any time and season, forming the energy absorbing part of the module. Underneath the walk-on surface flows pool water **2** pumped by the filter-pump unit, circulating through a plurality of tiles and warms up by the sun's radiation and/or warm air, before returning to the pool. To protect the collected energy from heat loss, the bottom part of the module **3** is designed and formed as a plurality of air-chambers, with air as natural insulation means. The module has 2 male **4** and 2 female **5** adapters, to interconnect with each other, via the built in snap joint pins **6** for fast installation.
As a variation of the invention, not depicted in the drawings, the depicted planar shaped module can be moulded in any shape to serve different purposes. As an example, but not limited to, it can be designed as a roof-tile, to heat houses, with the same aforementioned advantages

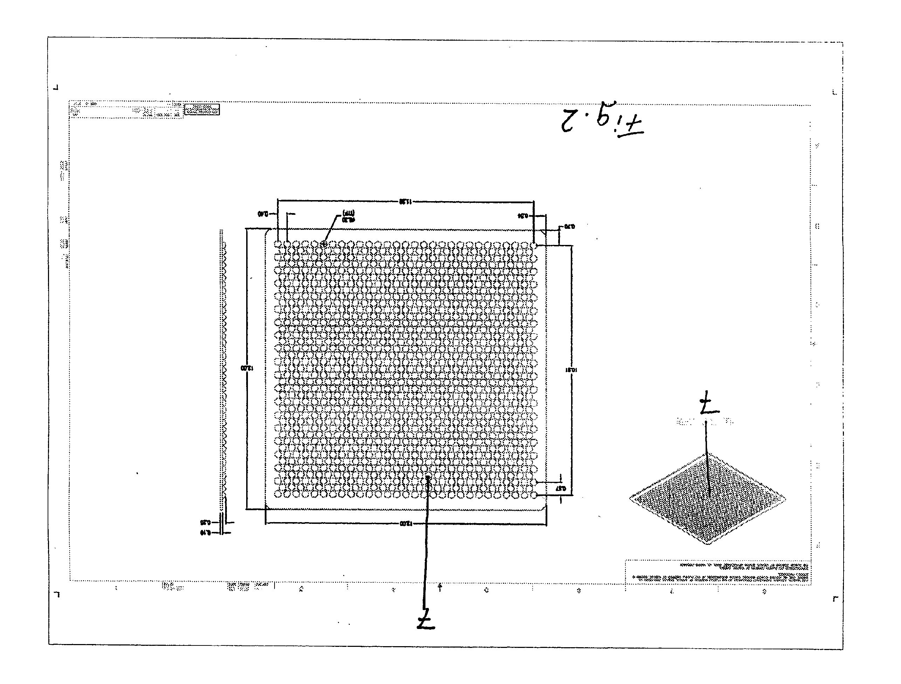

Fig. 2 shows the top view of the modules heat absorbing surface. It serves different purposes: In contrary to any tubular system, it exposes more surface to the sun, while the additional, moulded-in hemispheres "bubbles"**7** enlarge the geometrical surface area, compared to a planar surface with the same perimeter, hereby improving energy absorption even furthermore. Hemispheres are the only geometrical forms, that expose an always perfect 90 degree angle for the sun's radiation, no matter where the sun stands and in all seasons.
As a complimentary effect, they create a non-skid surface.
In a further embodiment variation of the invention,- not shown in the drawings- it is also possible to enlarge the surface by other than hemispherical, geometrical shapes, like cones, waves, pyramids, ribs, dimples, sand blasting, or any other structural patterns.

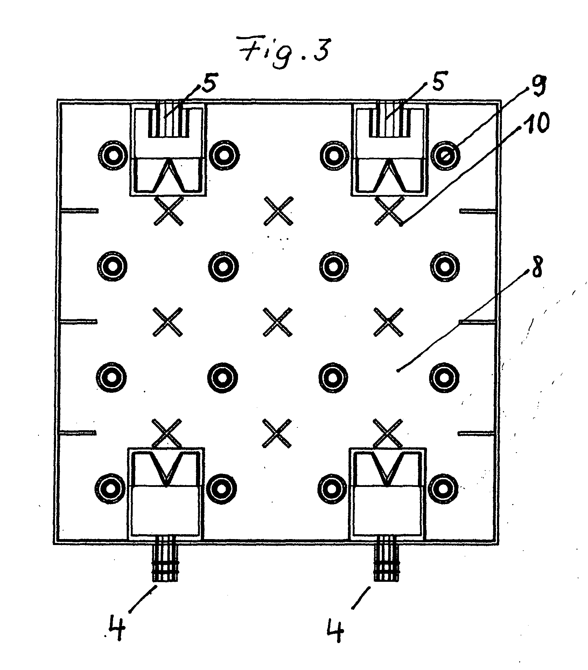

Fig. 3 is the view of the module's water leading section, with the heat absorbing part (Fig. 2) removed. It shows a planar shaped water passage **8** with an even depth throughout the module. That "flatbed" eliminates the tubular system's immanent disadvantages: The sun's radiation energy decreases with the depth of its penetration. Therefore in any tubular system, the sun exposed part of a tube is always warmer than the bottom part, hereby reducing efficiency.
The round bosses **9** and crosses **10** serve as spacers and supports between the upper and lower part of the water leading section. They are designed and placed in a way to evenly distribute any weight brought upon the module. As a complimentary function they whirl and circulate the water, to avoid hot spots and improve efficiency.
In a further embodiment variation of the invention, it is also possible to achieve the same results with different shapes or structures of spacers and supports, like open edged rhombuses, but not limited to. It is also possible to mould those spacers and supports into the bottom part of the heat absorbing part (Fig. 2), to enhance its rigidity. This embodiment is shown in Fig. 6

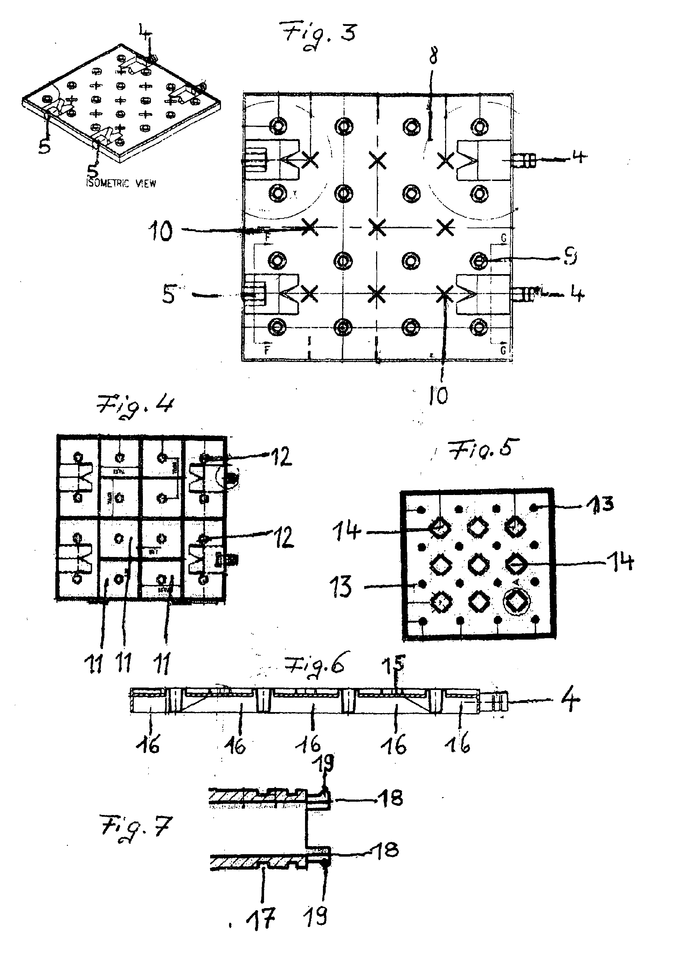

Another variation of the invention's water leading section is to divide it into a plurality of separate, square or rectangular side by side channels, where one channel contains encapsulated air, the next channel circulating pool water. That variation combines the advantages of a known glazed solar water heating collector on the roof, with the invention's hemispherical surface enlargement ("bubble-technology"), "flatbed" system, plus additional insulation against heat loss, as described in Fig. 4. This embodiment is not shown in the drawings.

Fig. 4 is the bottom view of the module. The sectional segments serve complimentary purposes They form the rigid structure of the module itself, where it sits on the ground, evenly distributing any weight, but they also form the air-chambers **11** for insulation purposes against loss of the collected energy: Air underneath the module and encapsulated by the sectional segments as a natural insulation mean ("Air-Pockets"), separating and insulating the water leading sections from the surface, the modules are laid on. The bosses **12** are an additional weight support and also serve as female receptors of the corresponding male adapters **13**, moulded in the bottom side of the upper surface plate, thus enhancing rigidity, stability, and balanced weight proportion of the module, for all its different purposes of use.

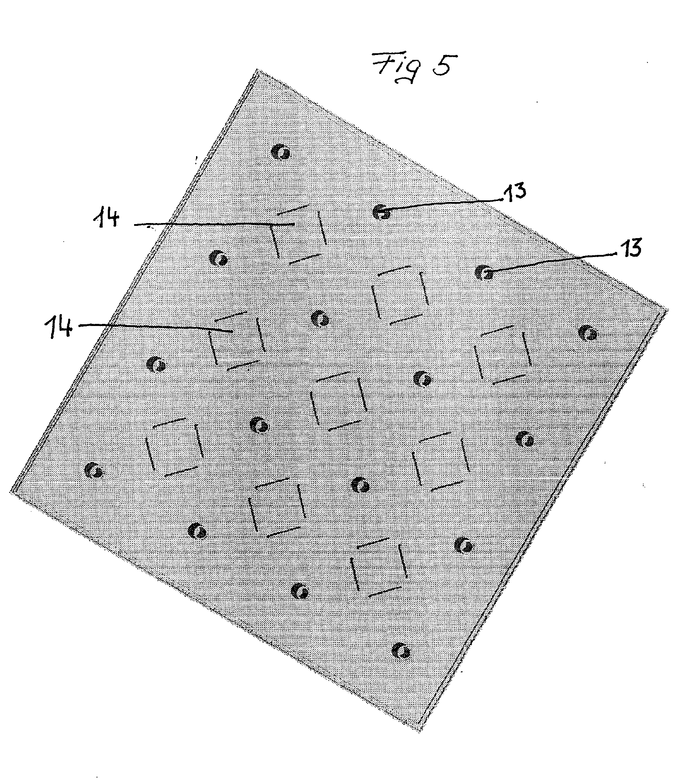

Fig.5 is an alternative of fig.3. Bosses and spacers are moulded in the bottom part of the upper heat absorbing surface plate, using open edged rhombuses **14** as spacers.

Fig. 6 is a sectional view of the module with a male connector **4.** The water leading section of the module **15** is designed for a given water flow quantity, but comparably thinner than the insulation part **16,** thus enhancing insulation and optimizing heat absorption.
The male adapter has at least 1 tubular grove **17**, the drawing shows 2, with rectangular notches **18** for O-ring reception. The male adapter is sized to fit into the female coupling **5,** using rubber O-rings to prevent water from leaking.

Fig. 7 is the detailed section of the male adapter as described in fig.6, showing the snap joint pins **18** for easy snap-in connection. The snap joints **18** consist of a plurality of elongated, notched, bendable parts of the male adapter **4** with outward bent hooks **19,** whose outer diameter is slightly larger than the male's, to interconnect and lock with the female adapter. The dimension of the snap-joints is designed to leave a minimal gap between the adjoining tiles for the expansion of the material.

## Claims

**1.** A thermal water heating module of a substantially planar, -or according to its intended use- shaped, connectable heating unit, having a heat absorbing enlarged upper surface, an evenly deep water leading section and bottom air insulation, with inlets and outlets as connecting elements and for circulating water through a plurality of the modules.

**2.** Module according to claim 1, wherein the upper surface area, which is exposed to the solar radiation, is arranged and constructed with geometrical shapes like,- but not limited to-, hemispheres, cones, pyramids, ribs, waves, lines, dimples, sand-blasting- or any structural patterns that enlarge the surface area, so that the radiation exposed surface area is larger than a planar surface area within the same perimeter.

**3.** Module according to claims 1 and 2, wherein the water leading section has a substantially rectangular, spacious cross section, providing the same depth throughout the module, consisting of
a) one water leading section or a plurality of water channels
or
b) a plurality of channels within the section, wherein one channel contains encapsulated air, the adjacent channel the water flow.

**4.** Module according to claim 3, wherein the circulation path inside the water leading section is arranged and constructed with spacer- and support-elements of any shape that evenly distribute the water flow within and any weight on the surface of the module.

**5.** Module according to claim 1, wherein the bottom part consists of one or a plurality of spacious sections, each forming an air chamber.

**5.** Module according to claim 1, with at least one connecting element for connecting a plurality of modules, consisting of
a) Tubular shaped male to male connectors, using a hose or pipe as connecting means,
or
b) Tubular shaped male to female connectors, using snap joint pins with hooks at the male end to interconnect and lock with the female recipient.

**6.** Male connector according to claim 5, arranged with at least one grove in the shape of a notch, for the use of O-rings for a leak proof connection.

**7.** Module according to claim 1, wherein each module includes additional connecting means for alignment and to connect and interlock a plurality of modules.

**8.** Module according to claim 1, wherein the module is made of UV stabilized plastic polymer materials.
